# EUROPÄISCHE PATENTSCHRIFT

(11) **EP 1 742 135 B1**
(45) Veröffentlichungstag und Bekanntmachung des Hinweises auf die Patenterteilung: **08.10.2008**
(21) Anmeldenummer: 05014938.4
(22) Anmeldetag: 09.07.2005
(51) Int. Cl.: G06F 1/00, G06F 21/00, H04L 29/06

(54) **Schutzsystem für eine Datenverarbeitungsanlage**
Protection system for a data processing installation
Système de protection pour un système de traitement des données

(43) Veröffentlichungstag der Anmeldung: 10.01.2007
(73) Patentinhaber: ads-tec GmbH, 70771 Leinfelden-Echterdingen (DE)
(72) Erfinder: Speidel, Thomas, 71706 Markgröningen (DE)
(74) Vertreter: Wasmuth, Rolf

(56) Entgegenhaltungen:
- EP-A- 1 164 766
- US-A- 6 026 502
- US-A1- 2002 138 762
- US-A1- 2004 098 621

## Beschreibung

Die Erfindung betrifft ein Schutzsystem für eine Datenverarbeitungsanlage.

Schutzsysteme für Datenverarbeitungsanlagen, sogenannte Firewalls, sind allgemein bekannt und werden eingesetzt, um den Datenverkehr zwischen einer internen Datenverarbeitungsanlage und einem externen Datennetz zu überprüfen und unbefugte Zugriffe sowohl vom externen Datennetz auf die interne Datenverarbeitungsanlage als auch von der internen Datenverarbeitungsanlage auf das externe Datennetz zu unterbinden. Die Blockierung von Daten erfolgt dabei üblicherweise über ein Softwareprogramm.

Bei internen Datenverarbeitungsanlagen ist es beispielsweise für Wartungszwecke wünschenswert, den Datenverkehr zwischen dem externen Datennetz und der internen Datenverarbeitungsanlage vollständig zu unterbinden.

Aus der US 6,026,502 ist ein Schutzsystem für eine Datenverarbeitungsanlage bekannt, bei dem zwischen einem mit dem Internet verbundenen Rechner und einem internen Server Optokoppler angeordnet sind, die einen Zwischenspeicher entweder mit dem internen Server oder mit dem mit dem Internet verbundenen Rechner verbinden. Dabei sind zwei Optokoppler auf der Eingangsseite des internen Servers vorgesehen und zwei Optokoppler auf der Ausgangsseite des internen Servers. Dadurch ist ein vergleichsweise aufwändiger Aufbau des Schutzsystems gegeben. Der mit dem Internet verbundene Rechner ist ungeschützt.

Die US 2004/0098621 A1 offenbart ein Schutzsystem, das einen internen Rechner über einen Relaisschalter mit einem externen Netzwerk verbindet. Der Relaisschalter wird nur dann geschlossen, wenn Daten von dem internen Rechner an das externe Netzwerk versandt werden sollen. Sobald die Datenübertragung beendet ist, wird der Schalter wieder geöffnet, so dass keine Verbindung besteht. Eine Überprüfung der übertragenen Daten ist nicht vorgesehen.

Die EP 1 164 766 A2 zeigt ein Schutzsystem, bei dem das interne Netzwerk oder ein externes Netzwerk über einen Schalter mit Zwischenspeichern verbunden werden können. Dadurch müssen alle Daten, die zwischen dem internen Netzwerk und dem externen Netzwerk ausgetauscht werden, zwischengespeichert werden. Eine direkte Verbindung zwischen dem internen Netzwerk und dem externen Netzwerk ist aufgrund der Struktur des Schalters nicht möglich. Der Schalter stellt ein zusätzliches Bauteil dar. Aufgrund des Schalters und der zusätzlich benötigten Zwischenspeicher ergibt sich ein aufwändiger Aufbau.

Der Erfindung liegt die Aufgabe zugrunde, ein Schutzsystem für eine Datenverarbeitungsanlage zu schaffen, bei dem eine sichere Trennung zwischen einem externen Datennetz und einer internen Datenverarbeitungsanlage auf einfache Weise erfolgen kann.

Diese Aufgabe wird durch ein Schutzsystem für eine Datenverarbeitungsanlage mit den Merkmalen des Anspruchs 1 gelöst.

Die Sperreinrichtung ermöglicht eine sichere Trennung der internen Datenverarbeitungsanlage vom dem externen Datennetz unabhängig von Softwarefunktionen wie dem Regelwerk der Überprüfungseinrichtung. Dadurch kann bei Aktivierung der Sperreinrichtung sichergestellt werden, daß eine Trennung erfolgt ist, selbst wenn die Funktion der Überprüfungseinrichtung beispielsweise durch Softwarefehlfunktionen nicht mehr gewährleistet ist. Die Unterbrechung der Datenübertragung erfolgt dabei unabhängig von den gesendeten Daten.

Vorteilhaft besitzt das Schutzsystem einen externen Anschluß, wobei die Sperreinrichtung über den externen Anschluß zur Sperrung der Datenverbindung zu aktivieren ist. Über den externen Anschluß ist eine einfache Möglichkeit der Aktivierung der Sperreinrichtung gegeben. Der externe Anschluß ermöglicht dadurch eine sichere Trennung der internen Datenverarbeitungsanlage von dem externen Datennetz über externe Steuergeräte. Dadurch kann beispielsweise zu Wartungszwecken der internen Datenverarbeitungsanlage ein Steuergerät an den externen Anschluß angeschlossen und die Sperreinrichtung aktiviert werden.

Es ist vorgesehen, daß die Sperreinrichtung von der Überprüfungseinrichtung aktivierbar ist. So kann, wenn die Überprüfungseinrichtung unbefugte Zugriffe feststellt, die physikalische Datenverbindung gesperrt werden, und so unabhängig von Softwarefunktionen der Datenverkehr über die Datenverbindung unterbunden werden. Vorzugsweise wirkt die Sperreinrichtung auf die Spannungsversorgung des Übertragungsbausteins (TRANSCEIVER). Die Sperreinrichtung kann dadurch die Spannungsversorgung des Übertragungsbausteins unterbrechen, so daß kein Datenaustausch über den Übertragungsbaustein mehr möglich ist. Es kann vorgesehen sein, daß die Sperreinrichtung und der Übertragungsbaustein so geschaltet sind, daß die Sperreinrichtung einen dauerhaften Resetzustand des Übertragungsbausteins bewirken kann. Auch durch einen dauerhaften Resetzustand wird der LINK unterbrochen und es ist keine Verbindung mehr möglich, so daß die physikalische Datenverbindung sicher gesperrt ist. Auch andere Lösungen zur physikalischen Sperrung der Datenverbindung können vorgesehen sein.

Um eine einfache Aktivierung der Sperreinrichtung zu erlauben, ist vorgesehen, daß der externe Anschluß ein Spannungseingang ist. So kann durch Anlegen einer Spannung am externen Anschluß die interne Datenverarbeitungsanlage vom externen Datennetz getrennt werden. Vorteilhaft besitzt die interne Datenverarbeitungsanlage eine Detektionseinrichtung zur Ermittlung des Zustands der Sperreinrichtung. So kann ermittelt werden, ob die Sperreinrichtung aktiviert, also die Verbindung zum externen Datennetz unterbrochen ist oder nicht. Dieser Zustand kann ausgewertet und die interne Datenverarbeitungsanlage entsprechend betrieben werden.

Ein eigenständiger erfinderischer Gedanke liegt darin, das Schutzsystem mit einem Ereignisspeicher zu versehen, der von der Überprüfungseinrichtung beschreibbar ist. Die Anordnung des Ereignisspeichers im Schutzsystem ist unabhängig von einer Sperreinrichtung des Schutzsystems vorteilhaft. Derartige Ereignisspeicher für Schutzsysteme sind bekannt, werden jedoch üblicherweise in der internen Datenverarbeitungsanlage, also auf hintergelagerten Servern, angeordnet. Dadurch, daß der Ereignisspeicher im Schutzsystem angeordnet ist, kann auf hinterlagerte Ereignisspeicher auf Servern verzichtet werden.

Der Ereignisspeicher ist insbesondere ein nicht flüchtiger Speicher, insbesondere ein NVRAM. Um eine einfache Auslesung des Ereignisspeichers zu ermöglichen, ist vorgesehen, daß der Ereignisspeicher einen externen Ausgang zur Auswertung des Speichers über ein externes Lesegerät besitzt. Dadurch kann der Ereignisspeicher auch beim Ausfall der Datenverarbeitungsanlage einfach und schnell ausgelesen werden. Eine weitere Auswertung kann über eine entsprechende Anzeigeeinrichtung auch direkt auf dem Gerät erfolgen.

Ausführungsbeispiele der Erfindung werden im folgenden anhand der Zeichnung erläutert. Es zeigen:
- Fig. 1: eine schematische Darstellung eines Schutzsystems mit deaktivierter Sperreinrichtung,
- Fig. 2: das Schutzsystem aus Fig. 1 mit aktivierter Sperreinrichtung.

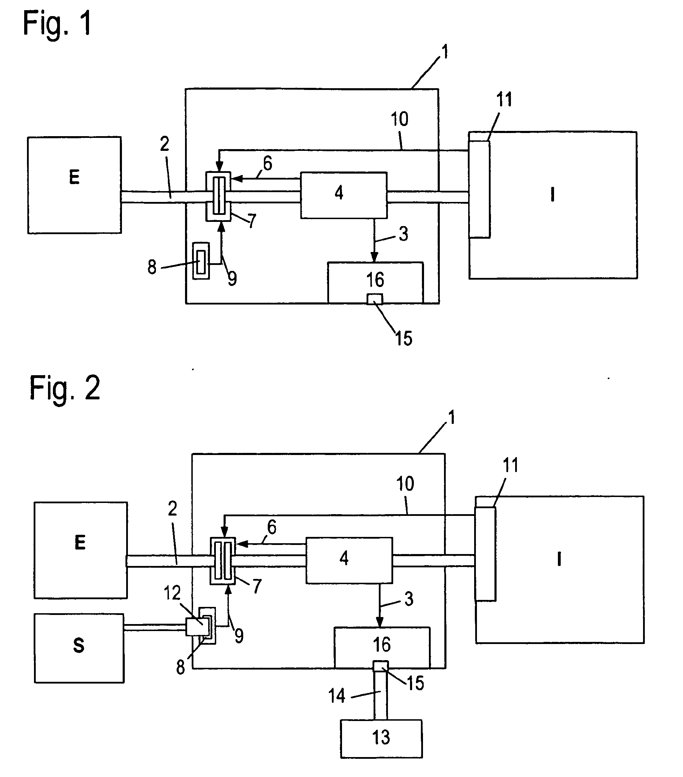

Fig. 1 zeigt ein externes Datennetz E, das über eine Datenverbindung 2 mit einer internen Datenverarbeitungsanlage I verbunden ist. Das externe Datennetz kann beispielsweise das Internet und die interne Datenverarbeitungsanlage ein Intranet oder eine Steuerungsanlage sein. Zwischen dem externen Datennetz und der internen Datenverarbeitungsanlage ist ein Schutzsystem 1 angeordnet. Das Schutzsystem 1 besitzt eine Überprüfungseinrichtung 4, die die über die Datenverbindung 2 ausgetauschten Daten analysiert und passieren läßt oder blockiert. Die Überprüfungseinrichtung 4 kann beispielsweise ein Paketfilter und/oder ein Application Gateway sein. In Fig. 1 ist die Überprüfungseinrichtung mit zwei Anschlüssen in die Datenverbindung 2 eingebunden, so daß alle über die Datenverbindung 2 ausgetauschten Daten die Überprüfungseinrichtung 4 passieren müssen. Es kann jedoch auch vorgesehen sein, die Überprüfungseinrichtung mit nur einem Anschluß in die Datenverbindung 2 einzubinden, über den sowohl die eingehenden als auch die ausgehenden Daten fließen. Die Überprüfungseinrichtung 4 kann anhand eines Regelwerks, beispielsweise der in einem Paketfilter hinterlegten Filterregeln, Daten passieren lassen oder blockieren. Das Blockieren erfolgt dabei durch das Softwareprogramm. Eine Trennung oder Sperrung der physikalische Datenverbindung 2 an der Überprüfungseinrichtung 4 ist nicht vorgesehen.

Zur Sperrung der physikalischen Datenverbindung 2 besitzt das Schutzsystem 1 eine Sperreinrichtung 7, die zwischen der Überprüfungseinrichtung 4 und dem externen Datennetz E angeordnet ist. Die Sperreinrichtung 7 kann gemäß dem Pfeil 6 von der Überprüfungseinrichtung 4 aktiviert werden, so daß die Sperreinrichtung 7 die physikalische Datenverbindung 2 sperrt. Dieser Zustand kann von einer Detektionseinrichtung 11, die in der internen Datenverarbeitungsanlage angeordnet ist, gemäß dem Pfeil 10 detektiert werden. Die Detektionseinrichtung 11 ist insbesondere eine übergeordnete Netzwerkkomponente, beispielsweise ein der internen Datenverarbeitungsanlage I vorgelagerter Switch oder Router. Die Detektionseinrichtung 11 kann die Information über den Zustand der Sperreinrichtung 7, also ob die Sperreinrichtung 7 aktiviert und die Datenverbindung 2 getrennt bzw. gesperrt oder die Sperreinrichtung 7 deaktiviert und das externe Datennetz E mit der internen Datenverarbeitungsanlage I verbunden ist, auswerten und den Datenfluß in der internen Datenverarbeitungsanlage I entsprechend steuern. Das Schutzsystem 1 besitzt einen externen Anschluß 8, der mit der Sperreinrichtung 7 verbunden ist und über den die Sperreinrichtung 7 gemäß dem Pfeil 9 aktivierbar ist. Die Sperreinrichtung 7 kann damit sowohl von der Überprüfungseinrichtung 4 als auch über den externen Anschluß 8 aktiviert werden.

Bei bekannten Schutzsystemen ist ein Ereignisspeicher, ein sogenannter Logfile, vorgesehen, der in der internen Datenverarbeitungsanlage angeordnet ist. Bei einem Ausfall der internen Datenverarbeitungsanlage kann auf den Ereignisspeicher nicht zugegriffen werden. Ein eigenständiger erfinderischer Gedanke sieht vor, einen Ereignisspeicher 16 im Schutzsystem 1 anzuordnen. Die Überprüfungseinrichtung 4 trägt Ereignisse entsprechend dem Pfeil 3 in den Ereignisspeicher 16 ein. Der Ereignisspeicher 16 wird dabei im Free-Run-Modus betrieben, das heißt als Endlosschleife. Dabei werden, sobald der Speicher voll ist, die ältesten Eintragungen überschrieben. In dem Ereignisspeicher 16 können beispielsweise Datum und Uhrzeit des Ereignisses, die Art des aufgetretenen sicherheitsrelevanten Ereignisses sowie Informationen über Inhalt und Absender der zugehörigen Daten gespeichert sein. Im Ereignisspeicher 16 sind vorzugsweise Logbucheinträge und statistische Datensätze enthalten. Der Ereignisspeicher 16 ist insbesondere ein nicht flüchtiger Speicher, vorzugsweise ein NVRAM (Non Volatile Random Access Memory). Der Ereignisspeicher 16 besitzt einen Anschluß 15 zum Anschluß eines externen Lesegeräts. Es kann jedoch auch vorteilhaft sein, daß der Ereignisspeicher 16 zum Auslesen aus dem Schutzsystem 1 entnommen werden kann. Ein Ereignisspeicher 16 kann auch in Schutzsystemen eingesetzt werden, die keine Sperreinrichtung zur Trennung der physikalischen Datenverbindung besitzen.

In Fig. 2 ist das Schutzsystem 1 bei aktivierter Sperreinrichtung 7 gezeigt. Am externen Anschluß 8 ist eine Steuerung S über einen Stecker 12 angeschlossen. Der externe Anschluß 8 ist insbesondere ein Spannungseingang. Bei Anlegen einer Spannung am externen Anschluß 8 über die Steuerung S wird die Sperreinrichtung 7 aktiviert und die Datenverbindung 2 wird physikalisch getrennt, so daß unabhängig von den Filterregeln der Überprüfungseinrichtung 4 ein Datenaustausch zwischen dem externen Datennetz E und der internen Datenverarbeitungsanlage I nicht mehr möglich ist. Vorzugsweise ist der externe Anschluß 8 ein 24 Volt-Gleichspannungsanschluß, so daß die Sperreinrichtung 7 die Datenverbindung 2 beim Anlegen einer 24 Volt-Spannung am externen Anschluß 8 trennt. Eine Trennung der Datenverbindung 2 unabhängig von Softwarefunktionen ist dadurch auf einfache und sichere Weise möglich.

Zum Auslesen des Ereignisspeichers 16 ist am Anschluß 15 ein Lesegerät 13 über eine Leitung 14 angeschlossen. Das Lesegerät 13 kann die Daten im Ereignisspeicher 16 auslesen und analysieren. Dies ist auch dann möglich, wenn die interne Datenverarbeitungsanlage ausgefallen ist. Dadurch ist es möglich, einfach und schnell den Grund für Störungen, beispielsweise für den Ausfall der internen Datenverarbeitungsanlage I, festzustellen. Hierzu sind keine externen Datenbanken oder -speicher notwendig.

Die Sperreinrichtung bewirkt eine Trennung der physikalischen Datenverbindung 2. Die Wirkung ist vergleichbar mit dem Kappen einer Leitung. Allerdings wird die Trennung durch entsprechende Beschaltung von Bausteinen oder Controllern des Schutzsystems 1 erreicht. Das Schutzsystem 1 besitzt zur Übertragung der Daten einen Übertragungsbaustein, einen sogenannten TRANSCEIVER. Die Sperreinrichtung 7 wirkt vorzugsweise auf die Spannungsversorgung des Übertragungsbausteins. Durch Entzug der Spannungsversorgung kann die Sperreinrichtung 7 so eine Übertragung über den Übertragungsbaustein sicher sperren, so daß die physikalische Datenverbindung getrennt ist.

Der Übertragungsbaustein besitzt üblicherweise einen Anschluß, an dem ein Reset des Bausteins ausgelöst werden kann. Die Sperreinrichtung 7 kann auf den Reset-Anschluß des Übertragungsbausteins wirken und diesen durch geeignete Schaltung dauerhaft in einen Resetzustand versetzen. Im Resetzustand können über den Übertragungsbaustein keine Daten übertragen werden, so daß auch hierdurch eine sichere Sperrung der physikalischen Datenverbindung erfolgt und kein Datenaustausch mehr möglich ist. Es können jedoch auch andere Lösungen für die Sperreinrichtung eingesetzt werden.

## Patentansprüche

1. Schutzsystem für eine Datenverarbeitungsanlage mit einer physikalischen Datenverbindung (2) zur Verbindung einer internen Datenverarbeitungsanlage (I) mit einem externen Datennetz (E), wobei das Schutzsystem (1) eine Überprüfungseinrichtung (4) zur Überprüfung der über die Datenverbindung (2) ausgetauschten Daten und eine Sperreinrichtung (7) zur Sperrung der physikalischen Datenverbindung (2) besitzt,
wobei das Schutzsystem (1) einen Übertragungsbaustein zur Übertragung der Daten besitzt, und wobei die Sperreinrichtung (7) zur Sperrung der physikalischen Datenverbindung (2) auf den Übertragungsbaustein wirkt,
wobei
- das Schutzsystem (1) zwischen dem externen Datennetz (E) und der internen Datenverarbeitungsanlage (I) angeordnet ist,
- der Übertragungsbaustein ein TRANSCEIVER ist,
- die Sperreinrichtung (7) eine Trennung der physikalischen Datenverbindung (2) durch entsprechende Beschaltung von Bausteinen des Schutzsystems (1) erreicht, und
- der Baustein, auf den die Sperreinrichtung (7) einwirkt, der TRANSCEIVER ist,
**dadurch gekennzeichnet,**
**daß** die Sperrung der physikalischen Datenverbindung (2) **dadurch** bewirkt wird, daß die Sperreinrichtung (7) die Spannungsversorgung des TRANSCEIVERs unterbricht, so daß kein Datenaustausch über den TRANSCEIVER mehr möglich ist und/oder die Sperreinrichtung (7) auf den Reset-Anschluß des TRANSCEIVERs wirkt und diesen durch geeignete Schaltung dauerhaft in einen Resetzustand versetzt.

2. Schutzsystem nach Anspruch 1,
**dadurch gekennzeichnet, daß** das Schutzsystem (1) einen externen Anschluß (8) besitzt und die Sperreinrichtung (7) über den externen Anschluß (8) zur Sperrung der Datenverbindung (2) zu aktivieren ist.

3. Schutzsystem nach Anspruch 1 oder 2,
**dadurch gekennzeichnet, daß** die Sperreinrichtung (7) von der Überprüfungseinrichtung (4) aktivierbar ist.

4. Schutzsystem nach Anspruch 2 oder 3,
**dadurch gekennzeichnet, daß** der externe Anschluß (8) ein Spannungseingang ist.

5. Schutzsystem nach einem der Ansprüche 1 bis 4,
**dadurch gekennzeichnet, daß** die interne Datenverarbeitungsanlage (I) eine Detektionseinrichtung (11) zur Ermittlung des Zustands der Sperreinrichtung (7) besitzt.

6. Schutzsystem nach einem der Ansprüche 1 bis 5,
**dadurch gekennzeichnet, daß** das Schutzsystem (1) einen Ereignisspeicher (16) besitzt, der von der Überprüfungseinrichtung (4) beschreibbar ist.

7. Schutzsystem nach Anspruch 6,
**dadurch gekennzeichnet, daß** der Ereignisspeicher (16) ein nicht flüchtiger Speicher ist.

8. Schutzsystem nach Anspruch 6 oder 7,
**dadurch gekennzeichnet, daß** der Ereignisspeicher (16) einen externen Ausgang (15) zur Auswertung des Speichers über ein externes Lesegerät (13) besitzt.

## Claims

1. Protection system for a data processing installation with a physical data connection (2) for connecting an internal data processing unit (I) to an external data network (E), the protection system (1) comprising a checking device (4) for checking the data exchanged via the data connection (2) and a blocking device (7) for blocking the physical data connection (2), the protection system (1) comprising a transfer module for transferring the data and the blocking device (7) acting to block the physical data connection (2) to the transfer module, such that
- the protection system (1) is arranged between the external data network (E) and the internal data processing unit (I),
- the transfer module is a TRANSCEIVER,
- the blocking device (7) enables the physical data connection (2) to be interrupted by appropriate switching of modules of the protection system (1), and
- the module upon which the blocking device (7) acts is the TRANSCEIVER,
**characterised in that**
- the physical data connection (2) is blocked when the blocking device (7) cuts off the voltage supply to the TRANSCEIVER so that no data exchange is any longer possible via the TRANSCEIVER, and/or when the blocking device (7) acts upon the Reset terminal of the TRANSCEIVER and moves it to a lasting reset condition by appropriate switching.

2. Protection system according to Claim 1,
**characterised in that** the protection system (1) has an external terminal (8) and the blocking device (7) has to be activated via the said external terminal (8) to block to data connection (2).

3. Protection system according to Claims 1 or 2,
**characterised in that** the blocking device (7) can be activated by the checking device (4).

4. Protection system according to Claims 2 or 3,
**characterised in that** the external terminal (8) is a voltage input.

5. Protection system according to any of Claims 1 to 4,
**characterised in that** the internal data processing unit (I) comprises a detection device (11) for determining the condition of the blocking device (7).

6. Protection system according to any of Claims 1 to 5,
**characterised in that** the protection system (1) comprises an event memory (16) which can be described by the checking device (4).

7. Protection system according to Claim 6,
**characterised in that** the event memory (16) is a non-volatile memory.

8. Protection system according to Claims 6 or 7,
**characterised in that** the event memory (16) comprises an external output (15) that enables the memory to be evaluated by an external reading device (13).

## Revendications

1. Système de protection pour une installation de traitement de données, comportant une ligne de transmission de données (2) physique destinée à relier une installation de traitement de données (I) interne à un réseau de données (E) externe, le système de protection (1) comportant un dispositif de contrôle (4), destiné à contrôler les données échangées via la ligne de transmission de données (2), et un dispositif de blocage (7), destiné à fermer la ligne de transmission de données (2) physique,
le système de protection (1) comportant un module de transmission pour la transmission des données, et le dispositif de blocage (7), destiné à fermer la ligne de transmission de données (2) physique, agissant sur le module de transmission,
sachant que
◆ le système de protection (1) est monté entre le réseau de données (E) externe et l'installation de traitement de données (I) interne,
◆ le module de transmission est un émetteur-récepteur (transceiver),
◆ le dispositif de blocage (7) effectue une coupure de la ligne de transmission de données (2) par un câblage correspondant des modules du système de protection (1), et
◆ le module sur lequel agit le dispositif de blocage (7) est l'émetteur-récepteur,
**caractérisé en ce que**
la fermeture de la ligne de transmission de données (2) physique est obtenue par le fait que le dispositif de blocage (7) interrompt l'alimentation en courant de l'émetteur-récepteur, de telle sorte qu'aucun échange de données n'est plus possible via l'émetteur-récepteur, et/ou le dispositif de blocage (7) agit sur le raccord de réinitialisation de l'émetteur-récepteur et amène celui-ci en permanence à l'état de réinitialisation par un réglage approprié.

2. Système de protection selon la revendication 1, **caractérisé en ce que** le système de protection (1) comporte un raccord externe (8) et le dispositif de blocage (7) est destiné à être activé via le raccord externe (8) pour fermer la ligne de transmission de données (2).

3. Système de protection selon la revendication 1 ou 2, **caractérisé en ce que** le dispositif de blocage (7) peut être activé par le dispositif de contrôle (4).

4. Système de protection selon la revendication 2 ou 3, **caractérisé en ce que** le raccord externe (8) est une entrée de tension.

5. Système de protection selon l'une quelconque des revendications 1 à 4, **caractérisé en ce que** l'installation de traitement de données (I) interne comporte un dispositif de détection (11) destiné à déterminer l'état du dispositif de blocage (7).

6. Système de protection selon l'une quelconque des revendications 1 à 5, **caractérisé en ce que** le système de protection (1) comporte une mémoire d'événements (16), dans laquelle le dispositif de contrôle (4) peut écrire.

7. Système de protection selon la revendication 6, **caractérisé en ce que** la mémoire d'événements (16) est une mémoire non volatile.

8. Système de protection selon la revendication 6 ou 7, **caractérisé en ce que** la mémoire d'événements (16) comporte une sortie externe (15) pour analyser la mémoire via un lecteur externe (13).
